# EUROPÄISCHE PATENTSCHRIFT

(11) **EP 0 818 491 B1**
(45) Veröffentlichungstag und Bekanntmachung des Hinweises auf die Patenterteilung: **15.11.2000**
(21) Anmeldenummer: 97111677.7
(22) Anmeldetag: 09.07.1997
(51) Int. Cl.: C08G 69/04, C08G 69/18, C08G 69/28, C08K 5/3435, C08K 5/13

(54) **Witterungsstabile Polyamide und Verfahren zu deren Herstellung**
Weather-resistant polyamides and method for their preparation
Polaymides résistant aux imtempéries et leur méthode de préparation

(30) Priorität: 09.07.1996 DE 19627629; 27.05.1997 DE 19722135
(43) Veröffentlichungstag der Anmeldung: 14.01.1998
(73) Patentinhaber: INVENTA-FISCHER AG, 8002 Zürich (CH)
(72) Erfinder: Liedloff, Hanns-Jörg, Dr.rer.nat., 7013 Domat/Ems (CH)
(74) Vertreter: Becker Kurig Straus

(56) Entgegenhaltungen:
- EP-A- 0 345 648
- EP-A- 0 430 650
- DE-A- 2 237 849
- DE-A- 4 429 089

## Beschreibung

Die Erfindung betrifft insbesondere ein Verfahren zur Herstellung von Polyamiden durch Polymerisation bzw. Polykondensation von polyamidbildenden Monomeren (I) in Gegenwart der unten näher spezifizierten Komponenten II, III, IV und V, ferner aus I, II, III, IV und V zugängliche witterungsstabile Polyamide, in denen die Komponenten II, III, IV, V über Amidbindungen an die Polymerketten gebunden sind, sowie die Verwendung dieser Polyamide zur Herstellung von spritzgegossenen oder extrudierten Teilen, zur Herstellung von Fäden, Fasern oder Folien, beziehungsweise zur Herstellung von Schmelzklebepulvern oder -fasern.

Die Witterungsstabilität von Polyamiden, d.h. ihre Beständigkeit gegen die gleichzeitige oder wechselweise Einwirkung von UV-Strahlung und erhöhte Temperaturen in Anwesenheit von Sauerstoff und Feuchtigkeit, ist für eine Reihe von Anwendungen ungenügend. Die sogenannten vollaromatischen Polyamide (z.B. Kevlar®) ausgenommen, betrifft dieser Mangel praktisch alle bekannten Polyamide, die Homopolyamide PA-6, PA-66, PA-12, PA-11, PA-69, PA-6.10 usw. genauso wie die aus beliebigen aliphatischen Monomerkombinationen zugänglichen Copolyamide. Davon betroffen sind aber auch die teilkristallinen oder amorphen teilaromatischen Polyamide, welche von aromatischen Dicarbonsäuren, aliphatischen und/oder cycloaliphatischen Diaminen oder den entsprechenden Salzen und gegebenenfalls beliebigen anderen polyamidbildenden Monomeren abgeleitet sind.

Es ist seit langem gängige Praxis, bei der Polymerisation bzw. Polykondensation von Polyamiden Amine, Mono- oder Dicarbonsäuren als Kettenregler zu verwenden, wobei meist Carbonsäuren, wie z.B. der Essigsäure, Benzoesäure oder der Adipinsäure, für diesen Zweck eingesetzt werden. Es kommen aber auch aliphatische oder cycloaliphatische Diamine zum Einsatz, wenn es z.B. darum geht, die Haftung eines Polyamids an carboxyl- oder carbonsäureanhydridfunktionellen Polymeren zu verbessern. Die Aminregelung kann mit Erfolg auf Polymermischungen, z.B. Blends aus PA-6 oder PA-12 mit anhydridfunktionellem Poly(2.6-dimethylphenylenoxid), oder auf Polymerverbunde, z.B. Mehrschichtrohre oder -folien, angewendet werden. Durch die Art und Menge des Kettenreglers lassen sich weitere Effekte erzielen, die über eine reine Steuerung der Reaktionsgeschwindigkeit während der Polymerisation bzw. Polykondensation und des dabei zu erzielenden Molekulargewichts oder Polymerisationsgrades des betreffenden Polyamides hinausgehen. So wurde im Zusammenhang mit der hydrolytischen Polymerisation von Laurinlactam rechnerisch gezeigt, dass die Molekulargewichtsverteilung M_{w}/Mₙ des PA-12 von der Funktionalität und Menge des Kettenreglers und dem Umsatz der Polymerisation abhängt (siehe "Angewandte Makromolekulare Chemie 34" (1973), S. 135 - 152 und 153 - 163). Die Autoren weisen unter anderem nach, dass aus der Verwendung eines difunktionellen Kettenreglers, wie etwa der Adipinsäure, bei allen für die Praxis relevanten Kettenregler-Konzentrationen und Umsätzen engere Molekulargewichtsverteilungen resultieren als bei monofunktioneller Regelung bzw. bei ungeregeltem PA-12. Diese Befunde sollten wenigstens qualitativ auch auf andere Polyamide, z.B. PA-6, übertragbar sein. Die Ergebnisse der zitierten Arbeiten können von erheblicher praktischer Bedeutung sein, da bekannt ist, dass die Verarbeitbarkeit eines Polyamids durch seine Molekulargewichtsverteilung beeinflusst wird. Die Erfahrung lehrt, dass insbesondere beim Verspinnen von Polyamiden - in erster Linie PA-6 und PA-66 - vergleichsweise enge Molekulargewichtsverteilungen von Vorteil sind in Bezug auf die Verspinnbarkeit (Spinngeschwindigkeit und -sicherheit) und die Fasereigenschaften (Festigkeit und Gleichmässigkeit).

Neben den oben genannten "typischen" Kettenreglern (Benzoesäure, Essigsäure, Adipinsäure) gibt es weitere als Kettenregler wirkende Substanzen, welche aufgrund ihres speziellen Molekülaufbaus zur Verbesserung der Hitze - und gegebenenfalls Lichtstabilität von Polyamiden geeignet sind. Zu diesen Substanzen gehören zum einen Carboxyl- bzw. ester- oder aminfunktionalisierte sterisch gehinderten Phenole, in denen die phenolische OH-Gruppe durch ein oder zwei voluminöse Alkylgruppen sterisch abgeschirmt ist, z.B. die 3,5-Di-t-butyl-4-hydroxy-benzoesäure, die 3-(3,5-Di-t-butyl-4-hydroxyphenyl)-propionsäure oder das 3-(3,5-Di-t-butyl-4-hydroxyphenyl)-1-aminopropan. Zum anderen gehören dazu die 4-Amino-2,2,6,6-tetraalkylpiperidine, welche am N-Atom des Piperidinringes weiter substituiert sein können, z.B. das 4-Amino-2,2,6,6-tetramethylpiperidin, kurz Triacetondiamin genannt, oder 4-Amino-1-alkyl-2,2,6,6-tetramethylpiperidine mit C₁-C₁₈-Alkylresten oder einer Benzylgruppe in Position 1.

Die gleichzeitige Nutzung sterisch gehinderter Phenole des oben beschriebenen Aufbaus zur Kettenregelung und Hitzestabilisierung von Polyamiden ist in der FR-PS 1 558 350, der DE-OS 2 237 849 und in der JP 4 159 327 beschrieben. Die FR-PS 1 558 350 kombiniert die sterisch gehinderten Phenole mit fünfwertigen Phosphorverbindungen. Wie aus den Beispielen hervorgeht, zielt die FR-PS damit primär auf die Hitzestabilisierung von Polyamid-Fasern ab und die Verbesserung der Farbechtheit anionisch eingefärbter Fasern bei thermooxidativer Belastung. Zwar ist in der FR-PS einleitend auch von der Beständigkeit gegen die abbauende Wirkung von Licht die Rede, experimentell belegt wird die Wirksamkeit der einzelnen Stabilisatorkombinationen gegen den durch Licht induzierten oxidativen Abbau von Polyamiden bzw. des ausschliesslich verwendeten PA-66 jedoch nicht. Zwecks Prüfung ihrer Hitze- und Farbstabilität werden eingefärbte PA-66-Fasern kurzzeitig einer hohen Temperatur ausgesetzt. Gemessen wird die dabei auftretende Abnahme der Aminoendgruppenkonzentration und die Verringerung der Farbintensität.

DE 1 919 021 B2 beschreibt die Verwendung von besonderen Phenolcarbonsäuren sowie von Phosphorsäure und/oder phosphoriger Säure bei der hydrolytischen Polymerisation von Laurinlactam. DE 1 919 021 zielt auf die Verbesserung der Beständigkeit von Polylaurinlactam gegen Einwirkung von Wärme, Licht und Sauerstoff. Die als Stabilisator verwendeten Phenolcarbonsäuren werden offensichtlich an den Polyamidkettenenden einkondensiert.

Die DE-OS 2 237 849 sieht zur Verbesserung der thermischen und oxidativen Stabilität von Polyamidzusammensetzungen die Verwendung der Aminsalze der 3,5-Dialkyl-4-hydroxyphenylcarbonsäuren vor. Die betreffenden Aminsalze können in das Polyamid vor, während und nach dem Polykondensationsschritt eingebracht werden, wobei davon auszugehen ist, dass diese Aminsalze bei Zugabe vor oder während der Polykondensation (bzw. Polymerisation, wenn Lactame als Monomere verwendet werden) als Kettenregler wirken. Als Mass für die Wirksamkeit der eingesetzten Aminsalze wird die Beibehaltung der spezifischen Viskosität der stabilisierten Polyamide und ihre Farbechtheit während eines Ofenalterungstests herangezogen.

In der JP 4 159 327 ist aus Laurinlactam in Gegenwart von z.B. 3,5-Di-t-butyl-4-hydroxybenzoesäure hydrolytisch polymerisiertes Polyamid-12 beschrieben, welches sich gegenüber unmodifiziertem PA-12 durch eine verbesserte Ölbeständigkeit und "Sour-gasoline"-Beständigkeit auszeichnet. Auch hier muss angenommen werden, dass die sterisch gehinderte Phenolcarbonsäure als Kettenregler wirkt und in Form entsprechender Endgruppen mit den Polymerketten verbunden ist.

EP 008431 A2 betrifft synergistische Gemische von Niedermolekularen und Hochmolekularen Polyalkylpiperidinen. Diese Gemische haben eine synergistische Wirkung und können verschiedenen Kunststoffen zugesetzt werden und insbesondere in der Schmelze eingemischt werden.

Da diese Mischprozesse nach wenigen Minuten (ca. 1-3 min.) abgeschlossen sind und die Verweilzeit der genannten Piperidinderivate in der Schmelze dementsprechend kurz ist, kann davon ausgegangen werden, daß es sich überwiegend um physikalische Mischungen handelt.

Die 4-Amino-2,2,6,6-tetraalkylpiperidine, die am N-Atom des Piperidinringes weiter substituiert sein können, sind Gegenstand der DE-OS 44 13 177 und der DE-OS 44 29 089. Sie übernehmen in den dort spezifizierten "Inhärent hitzestabilisierten Polyamiden" ebenfalls die Doppelfunktion von Hitzestabilisatoren und Kettenreglern. Das Stabilisierungsverfahren soll gemäss diesen DE-OS'n auf beliebige aliphatische und teilaromatische Polyamide bzw. Copolyamide anwendbar sein, exemplifiziert wird es allerdings nur an stabilisierten Polyamid-6-Typen für Spinnzwecke.

EP 345 648 B1 (Ems-Inventa AG) betrifft verzweigte thermoplastisch verarbeitbare Polyamide, erhältlich durch hydrolytische Polymerisation von ω-Aminocarbonsäuren und/oder Lactamen. Dabei beträgt der Anteil der Polymermoleküle, die mehr als eine Verzweigung besitzen, mindestens 50 Gew.%, was dadurch erreicht wird, daß der Schmelze der Grundmonomere verzweigend wirkende Komponenten der Arten Polycarbonsäure und Polyamin in einem streng definierten Molverhältnis zugesetzt werden. Diese Polyamide lassen sich chargenweise über längere Zeitspannen hinweg mit guter Reproduzierbarkeit und Qualität herstellen und besitzen hohe Fließfestigkeiten. In der EP 0 345 648 B1 wird ebenfalls beschrieben, daß man 4-Amino-2,2-6,6 tetraalkylpiperidine der Schmelze der Grundmonomere zumischen kann, so daß diese Verbindungen an den Polymerkettenenden eingebaut werden. Besonders bevorzugt wird gemäß EP 0 345 648 B1 4-Amino-2,2-6,6 tetraalkylpiperidin eingesetzt.

Alle vorstehend beschriebenen Verfahren zur Hitzestabilisierung von Polyamiden bzw. die daraus zugänglichen hitzestabilisierten Polyamide haben den unbestreitbaren Vorteil, dass durch die Zugabe der stabilisierend wirkenden Komponenten bereits vor oder während der Polymerherstellung verarbeitungsfertige Produkte resultieren, denen keine Stabilisatoren mehr zugemischt werden müssen. Ferner werden mit der Bindung der Stabilisator-Molekülreste an die Polymerketten Stabilisatorverluste durch Migration, Verdampfen oder Extraktion verhindert. Auf diese Weise wird die maximal mögliche Wirksamkeit der Stabilisatoren bei der Herstellung, Verarbeitung und dem Gebrauch der Polyamide sichergestellt.

Die feste Verankerung von Stabilisatormolekülen an den Kettenenden wird allerdings zum Nachteil, wenn es darum geht, Polyamide mit besonders hoher Widerstandsfähigkeit gegen Witterungseinflüsse, d.h. gegen die gleichzeitige oder zeitlich versetzte Einwirkung von UV-Strahlung, erhöhte Temperaturen und Feuchtigkeit bereitzustellen. Um den foto- und thermooxidativen Abbau von Polyamiden in Aussenanwendungen, bei denen sie den genannten polymerschädigenden Einflüssen ausgesetzt sind, über längere Zeit in Grenzen zu halten, müssen zwangsläufig relativ grosse Mengen an Stabilisatoren zugesetzt werden. Im Fall der polymergebundenen Stabilisatoren, wie sie oben beschrieben worden sind, führt dies automatisch zu einer entsprechenden Zunahme der Kettenregelung. Mit zunehmender Kettenregelung aber wird das in der Polymerisation bzw. Polykondensation des betreffenden Polyamids erreichbare Molekulargewicht und parallel dazu die Viskosität mehr und mehr herabgesetzt. Die polymergebundenen Stabilisatoren des Standes der Technik stossen also dort an die Grenzen ihrer Einsatzfähigkeit, wo die Anforderungen an die molekularen Eigenschaften des betreffenden Polyamids, d.h. an sein Molekulargewicht aber auch seine Endgruppenbilanz und an seine Witterungsstabilität mit dem einen oder anderen der genannten Stabilisatoren nicht mehr erfüllt werden können. Die Grenzen der Einsatzfähigkeit sind z.B. erreicht, wenn bei einem auf mittlere bis hohe Viskosität spezifizierten Polyamid die Stabilisatormenge soweit zurückgenommen werden muss, dass die geforderte Witterungsstabilität nicht mehr erreicht wird.

Daher ist es Aufgabe der Erfindung, neuartige witterungsstabile Polyamide und ein Verfahren zu deren Herstellung bereitzustellen. Dabei soll ein polymergebundenes Stabilisatorsystem geschaffen werden, welches bei gleicher Stabilisatormenge wenigstens die gleiche oder eine höhere Wirksamkeit als die Stabilisatoren des Standes der Technik entwickelt und es damit erlaubt, die oben aufgezeigten Grenzen in bezug auf die Witterungsstabilität und die molekularen Eigenschaften von Polyamiden im positiven Sinne zu verschieben.

Diese Aufgabe wird durch das Verfahren gemäß Anspruch 1 bzw. 2 bzw. durch die Polyamide nach Anspruch 12 bzw. 13 durch die Verwendung nach Anspruch 15 gelöst.

Überraschenderweise gelang die Lösung dieser Aufgabe gemäß einer Ausführungsform durch den vor Beginn oder während der Polymerisation bzw. Polykondensation erfolgenden Zusatz eines 4-Amino-2,2,6,6-tetraalkylpiperidins (II) und eines in 4-Stellung zur OH-Gruppe funktionalisierten 2,6-Dialkylphenols (IV) folgender Formel:

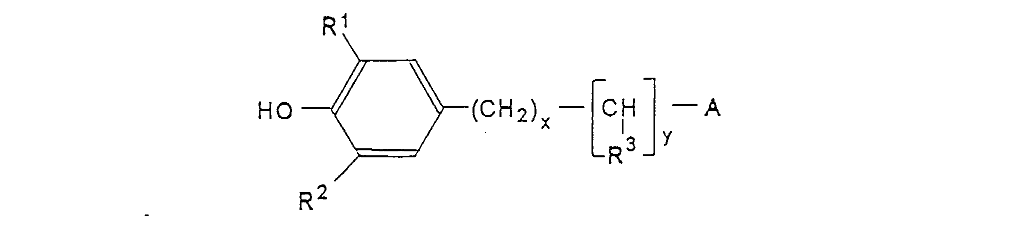

Dabei bedeuten R¹ und R² gleiche oder verschiedene Alkylreste mit 1 bis 6 C-Atomen, R³ ist entweder ein Wasserstoffatom oder eine Methylgruppe. Die funktionelle Gruppe A stellt darin entweder eine freie oder eine mit C₁-C₄-Alkoholen veresterte Carboxylgruppe oder eine primäre Aminogruppe dar, wobei für x und y im Fall der Aminogruppe die Wertekombinationen (x =2 / y = 1); (x = 2 / y = 0); (x = 1 / y = 0) und (x = 0 / y = 1) möglich sind und im Fall der freien oder veresterten Carboxylgruppe x und y zusätzlich jeweils 0 sein können. Ferner kann neben den Stabilisatorkomponenten II und IV ein aliphatisches oder cycloaliphatisches Diamin (III), welches eine primäre und eine tertiäre Aminogruppe trägt, zugesetzt werden.

Die Erfindung betrifft demnach ein Verfahren zur Herstellung von Polyamiden, wobei die Polymerisation bzw. Polykondensation von polyamidbildenden Monomeren (I) in Gegenwart von
■ 0,02 bis 0,7 Gew.-% 4-Amino-2,2,6,6-tetraalkylpiperidin (II),
■ 0 bis 0,5 Gew.-% eines aliphatischen oder cyloaliphatischen Diamins (III), welches eine primäre und eine tertiäre Aminogruppe trägt,
und
■ 0,02 bis 0,7 Gew.-% eines in 4-Stellung zur OH-Gruppe funktionalisierten 2.6-Dialkylphenols (IV) der Formel: 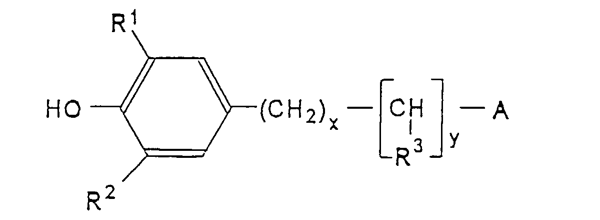 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2 / y = 1); (x = 2 / y = 0); (x = 1 / y = 0) und (x = 0 / y = 1) möglich sind und im Fall der freien oder veresterten Carboxylgruppe x und y zusätzlich jeweils 0 sein können,
durchgeführt wird, wobei sich die Mengen der Komponenten I bis IV zu 100 Gew.-% ergänzen, die Summe der Komponenten II, III und IV 0,05-1,3 Gew.-% beträgt und die Komponenten II, III und IV über Amidbindungen an die Polymerketten gebunden sind.

Die Erfindung betrifft in einer anderen Ausführungsform ein Verfahren zur Herstellung von witterungsstabilen, aus Lactamen, ω-Aminocarbonsäuren zugänglichen Polyamiden, wobei die Polykondensation der polyamidbildenden Monomere (I) in Gegenwart von
■ 0,02 bis 0,7 Gew.-% 4-Amino-2,2,6,6-tetraalkylpiperidin(ll),
■ 0 bis 0,5 Gew.-% eines aliphatischen oder cycloaliphatischen Diamins (III), welches eine primäre und eine tertiäre Aminogruppe trägt,
   und gegebenenfalls
■ 0,02 bis 0,7 Gew.-% eines in 4-Stellung zur OH-Gruppe funktionalisierten 2,6-Dialkylphenols (IV) der Formel: 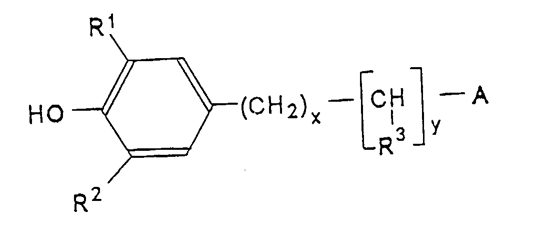 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁ - C₄-Alkoholen veresterte Carbo-xylgruppe oder eine primäre Aminogruppe darstellt, für x und y im Fall der Aminogruppe die Wertekombinationen (x = 2 / y=1); (x = 2 / y = 0); (x = 1 / y = 0) und (x = 0 / y = 1) möglich sind und im Fall der freien oder veresterten Carboxylgruppe x und y zusätzlich jeweils 0 sein können,
und
■ 0,1 bis 1,2 Gew.-% einer Tri-, Tetra- oder Polycarbonsäure (V)
   durchgeführt wird, wobei sich die Mengen der Komponenten I bis V zu 100 Gew.-% ergänzen, die Summe der Komponenten II, III, IV und V 0,2 - 2,5 Gew.-% beträgt und die Komponenten II, III, IV und V über Amidbindungen an die Polymerketten gebunden sind.

In den Unteransprüchen 2-15 werden bevorzugte Ausführungsformen des erfindungsgemässen Verfahrens beschrieben.

Ferner betrifft die Erfindung witterungsstabile Polyamide, welche dadurch charakterisiert sind, dass sie im wesentlichen aus den jeweiligen polyamidbildenden Monomeren (I),
■ 0,02-0,7 Gew.-% 4-Amino-2,2,6,6-tetraalkylpiperidin (II), wobei n-Amino-2,2,6,6-tetramethylpiperidin bevorzugt ist,
■ 0-0,5 Gew.-% eines aliphatischen oder cyloaliphatischen Diamins (III), welches eine primäre und eine tertiäre Aminogruppe trägt
und
■ 0,02-0,7 Gew.-% eines in 4-Stellung zur OH-Gruppe funktionalisierten 2,6-Dialkylphenols (IV) der Formel 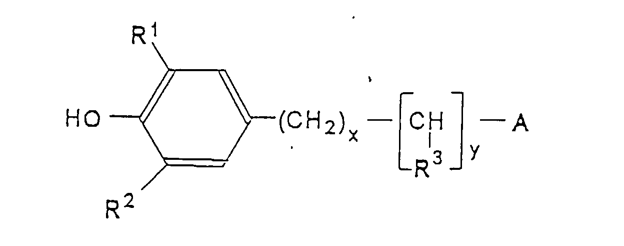 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2 / y = 1); (x = 2 / y =0); (x = 1 / y = 0) und (x = 0 / y = 1) möglich sind und im Fall der freien oder veresterten Carboxylgruppe x und y zusätzlich jeweils 0 sein können,
zugänglich und aufgebaut sind, wobei sich die Mengen der Komponenten I bis IV zu 100 Gew.-% ergänzen, die Summe der Komponenten II, III und IV 0,05-1,3 Gew.-% beträgt und die Komponenten II, III und IV über Amidbindungen an die Polymerketten gebunden sind.
Weiterhin betrifft die Erfindung witterungsstabile Polyamide aus Lactamen und ω-Aminocarbonsäuren, welche dadurch charakterisiert sind, daß sie im wesentlichen aus den jeweiligen Polyamid bildenden Monomeren (I)
■ 0,02-0,7 Gew.-% 4-Amino-2,2,6,6-tetraalkylpiperidin (II),
■ 0-0,5 Gew.-% eines aliphatischen oder cyloaliphatischen Diamins (III), welches eine primäre und eine tertiäre Aminogruppe trägt und gegebenenfalls
■ 0,02-0,7 Gew.-% eines in 4-Stellung zur OH-Gruppe funktionalisierten 2,6-Dialkylphenols (IV) der Formel 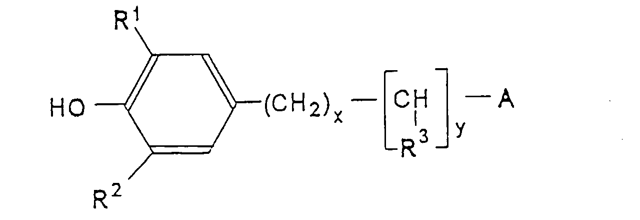 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2 / y = 1); (x = 2 / y = 0); (x=1 / y = 0) und (x = 0 / y=1) möglich sind und im Fall der freien oder veresterten Carboxylgruppe x und y zusätzlich jeweils 0 sein können,
und
■ 0,1 bis 1,2 Gew.-% einer Tri-, Tetra- oder Polycarbonsäure (V) aufgebaut sind,
   wobei sich die Mengen der Komponenten I bis V zu 100 Gew.-% ergänzen, die Summe der Komponenten II, III, IV und V 0,2 bis 2,5 Gew.-% beträgt und die Komponenten II, III, IV und V über Amidbindungen an die Polymerketten gebunden sind.

Wird gemäß einer besonderen Ausführungsform der Erfindung der Schmelze der Grundmonomeren aus reiner Aminosäure (und/oder Lactam) eine polyfunktionelle, beispielsweise trifunktionelle Carbonsäure zugegeben, so wächst in definiert drei Richtungen ein Polymermolekül, das an seinem Kettenende immer die COOH-Gruppe trägt. Da COOH-Gruppen unter üblichen Kondensationsbedingungen nicht miteinander reagieren, kann keine Vernetzung eintreten.

Werden Copolyamide aus beispielsweise 6-Lactam sowie ω-Aminoundecan bzw. ωAminododecansäure unter Verwendung der erfindungsgemäßen Kettenstrukturregelung sowie unter Zusatz einer trifunktionellen Carbonsäure, wie z.B. Nitrilotriessigsäure, Nitrilotriproprionsäure oder Trimethylnitrilotripropionsäure hergestellt, so kann durch das Mischungsverhältnis der Grundmonomeren deren Schmelzpunkt durch die gezielte Wahl des Reglersystems die Art und Konzentration der Endgruppen vorgegeben werden. Damit kann durch die mögliche hohe Konzentration an funktionellen Endgruppen und deren Art die Haftung an verschiedenen Substanzen gezielt an die Praxisanforderungen angepaßt werden.

Die vorgenannte trifunktionelle Verbindung muß also immer drei funktionelle Gruppen derselben Art besitzen. Sie sollte gut in der Schmelze der Monomeren löslich sein bzw. durch Salzbildung in Lösung gebracht werden können. Geeignete tri- oder tetrafunktionelle Carbonsäuren sind Nitrilotriessigsäure, Ethylendiamintetraessigsäure, Trimesinsäure.

Analog können auch Nitrilotripropionsäure oder Trimethylnitrilotripropionsäure verwendet werden.
Besonders bevorzugte Tricarbonsäuren sind Nitriloessigsäure und die Nitrilotripropionsäuren der folgenden Formel: 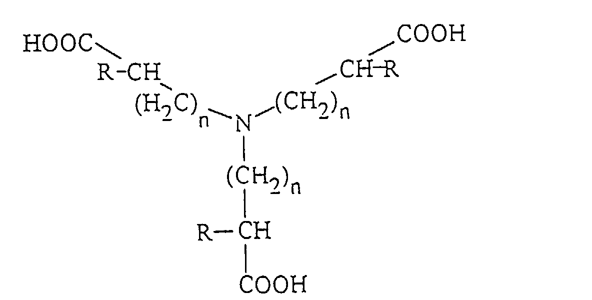
R = H; n = 0: Nitrilotriessigsäure
R = H; n = 1: Nitrilotripropionsäure
R = CH₃; n = 1: Trimethylnitrilotripropionsäure

Schliesslich betrifft die Erfindung die Verwendung der witterungsstabilen Polyamide zur Herstellung von spritzgegossenen oder extrudierten Teilen, zur Herstellung von Fäden, Fasern oder Folien, beziehungsweise zur Herstellung von Schmelzklebepulvern oder -fasern.

Das in bezug auf die Witterungsstabilität gefundene überraschend günstige, d.h. über eine reine Additivität der Einzeleffekte hinausgehende Zusammenwirken der zwei verschiedenen polymergebundenen und deshalb in ihrer Beweglichkeit eingeschränkten Stabilisatormolekülreste ist neu und gemessen am Stand der Technik völlig unerwartet.

Neben den als Stabilisatoren und gleichzeitig Kettenreglern wirkenden Komponenten II und IV kann mit der Diaminkomponente III ein weiterer Kettenreglerverwendet werden. Dieser Komponente kann allerdings keine Wirkung auf die Witterungsstabilität zugeschrieben werden, was aus einem der Beispiele hervorgeht. Die Diaminkomponente III hat also lediglich die Funktion eines Kettenreglers und dient insbesondere dazu, den Gesamtanteil aminischer Endgruppen des betreffenden Polyamids auf die Werte einzustellen, wie sie für die jeweilige Anwendung gefordert werden. Die Verwendung der Diaminkomponente III ist beispielsweise im Fall von Polyamid-6-Fasern sinnvoll, die gewöhnlich mit solchen Farbstoffen angefärbt werden, welche eine hohe Affinität zu basischen Zentren an den Polymermolekülen aufweisen. Bevorzugt wird die Diaminkomponente III aus der Gruppe bestehend aus 3-(Dialkylamino)-1-propylamin, 2-(Dialkylamino)-1-ethylamin, Piperidino- und Pyrrolidinoalkylaminen ausgewählt und in einer Menge von vorzugsweise 0-0,4 Gew.-% verwendet.

Selbstverständlich können die bekannten, eingangs aufgeführten Kettenregler in Mengen mitverwendet werden, welche den jeweiligen Vorgaben in bezug auf das Molekulargewicht und die Endgruppenkonzentrationen des Polyamids entsprechen. Diese zusätzlichen Kettenregler umfassen aromatische Di- und Monocarbonsäuren - bevorzugt Terephthalsäure, Isophthalsäure und Benzoesäure - , aliphatische oder cycloaliphatische Di- und Monocarbonsären - bevorzugt Adipinsäure, Sebazinsäure, Essig- und Propionsäure sowie Cyclohexan-1,4-dicarbonsäure sowie Monoamine und Diamine mit zwei primären Aminogruppen.

Werden anstelle von Dicarbonsäuren die verzweigend wirkenden Tricarbonsäuren als Kettenregler verwendet, so handelt es sich dabei bevorzugt um eine der vorstehend definierten Nitrilotricarbonsäuren.

Das erfindungsgemässe Verfahren zur Herstellung witterungsstabiler Polyamide ist auf beliebige aus polyamidbildenden Monomeren (I), das heisst aus Lactamen, ω-Aminocarbonsäuren, Dicarbonsäuren und Diaminen, Dicarbonsäure / Diamin-Salzen zugängliche aliphatische bzw. teilaromatische Polyamide oder Copolyamide anwendbar.

Die Lactame enthalten bevorzugt 6 - 12 Kohlenstoffatome, wobei Caprolactam und Laurinlactam besonders bevorzugt sind. Von den ω-Aminocarbonsäuren, die 6-12 Kohlenstoffatome enthalten, sind E-Aminocapronsäure und ω-Aminolaurinsäure besonders bevorzugt.

Als Dicarbonsäuren können geradkettige oder verzweigte aliphatische oder cycloaliphatische Dicarbonsäuren mit 6-36 Kohlenstoffatomen genausogut verwendet werden wie substituierte oder unsubstituierte aromatische Dicarbonsäuren mit 8-18 Kohlenstoffatomen. Von den beiden Untergruppen der Dicarbonsäuren sind Adipinsäure, Azelainsäure, Sebazinsäure, Dodecandisäure, die Trimethyl-adipinsäuren, cis- und/oder trans-Cyclohexan-1,4-dicarbonsäure und dimerisierte Fettsäuren (z.B. die Pripol-Typen der Firma UNICHEMA) bzw. Terephthalsäure, Isophthalsäure und Naphthalin-1,6-dicarbonsäure besonders bevorzugt.

Als Diamine können geradkettige oder verzweigte aliphatische Diamine mit 4-13 Kohlenstoffatomen und jeweils zwei primären Aminogruppen, cycloaliphatische Diamine mit 6 - 26 Kohlenstoffatomen und jeweils zwei primären Aminogruppen und araliphatische Diamine (aromatisch/aliphatisch) mit 8-26 Kohlenstoffatomen und jeweils zwei mit aliphatischen C-Atomen verknüpften primären Aminogruppen verwendet werden.

Von den drei Untergruppen der Diamine sind Hexamethylendiamin (1,6-Diaminohexan), 1,10-Diaminodecan, 1,12-Diaminododecan, 1,4-Diaminobutan, 2,2,4-und/oder 2,4,4-Trimethyl-1,6-diaminohexan bzw. cis- und/oder trans-1,4-Diaminocyclohexan, cis- und/oder trans- 1,4-Bis (aminomethyl)-cyclohexan, 3-Amino-3,5,5-trimethylcyclohexylamin, die isomeren Bis-(4-amino-3-methylcyclohexyl)methane und die isomeren 2,2-Bis-(4-aminocyclohexyl)propane bzw. 1,3 und 1,4-Bis-(aminomethyl)benzol besonders bevorzugt.

Zu den verwendeten Dicarbonsäure/Diamin-Salzen gehören die durch Reaktion annähernd stöchiometrischer Mengen der genannten Dicarbonsäuren und Diamine erhältlichen Salze. Besonders bevorzugt ist das aus Hexamethylendiamin und Adipinsäure zugängliche Hexamethylendiammonium-adipat. Alle anderen möglichen Salze werden gewöhnlich unmittelbar vor der Polykondensation in wässriger Lösung aus der (den) betreffenden Dicarbonsäure(n) und dem (den) betreffenden Diamin(en) hergestellt und in dieser Form in die Polykondensation eingesetzt. Ferner gehören zu den verwendeten Diaminen als vierte Untergruppe die Diamino-poly(oxyalkylene) mitendständigen primären Aminogruppen. Besonders bevorzugte Polyetherdiamine sind α, ω-Diamino-poly(oxy-1,2-propylen), α, ω-Diamino-poly(oxy-1,3-propylen),α,ω-Bis(3-aminopropyl)-poly(oxy-1,3-propylen) und α, ω-Bis(3-aminopropyl)-poly(oxy-1,4-butylen).

Aus den vorstehend aufgeführten polyamidbildenden Monomeren (I) kann eine grosse Zahl von Homopolyamiden, Copolyamiden und Blockcopolyamiden aufgebaut werden. Zu den Homopolyamiden, auf die das erfindungsgemässe Verfahren zur Erzeugung von Witterungsstabilität bevorzugt angewendet wird, gehören Polyamid -6, -11, -12, -66, -69, -610, -6.12
- 6l (l steht für Isophthalamideinheiten) und
- MXDA.6 (MXDA steht für meta-Xylylendiamin bzw. 1,3-Bis-(aminomethyl)benzol).

Zu den Copolyamiden und Blockcopolyamiden gehören entsprechend folgende Produkte: CoPA-6/12, -6/66, -66/12, -6/66/12, -6/69, -6/610, -66/610, sowie weitere ternäre und quarternäre Copolyamide aus diesen Monomeren, CoPA-6T/6l mit weniger als 40 mol-% Hexamethylenterephthalamid (6T)-Einheiten, die aus Laurinlactam bzw. ω-Aminolaurinsäure, Isophthalsäure und/oder Terephthalsäure sowie den isomeren Bis-(4-amino-3-methylcyclohexyl)-methanen oder 2,2-Bis-(4-aminocyclohexyl)-propanen aufgebauten Copolyamide, das Copolyamid aus Dodecandisäure und den isomeren Bis-(4-amino-3-methylcyclohexyl)methanen und die Blockcopolyetheramide, welche aus Caprolactam oder Laurinlactam, Dicarbonsäuren und α, ω-Diaminopoly(oxy-1,2-propylen) aufgebaut sind.

Die nach dem erfindungsgemässen Verfahren zugänglichen erfindungsgemässen witterungsstabilen Polyamide können grundsätzlich in chargenweise oder in Kontinuierlich arbeitenden Reaktoren durch Polymerisation bzw. Polykondensation hergestellt werden. Von den zahlreichen jeweils bekannten Verfahren des Standes der Technik unterscheidet sich das erfindungsgemässe Verfahren lediglich dadurch, dass mit den Komponenten II, IV und gegebenenfalls III zwei bzw. drei weitere Rohstoffe in relativ kleinen Mengen an geeigneter Stelle in den jeweiligen Herstellprozess eingebracht werden. Die Zugabe dieser Komponenten ist in den allermeisten Fällen völlig unproblematisch und kann gemeinsam, nacheinander, vor oder während der Polymerisation bzw. Polykondensation erfolgen.

Die erfindungsgmässen witterungsstabilen Polyamiden können je nach ihrer Verwendung auf verschiedene Weise weiter modifiziert werden. So ist bei den Polyamiden, welche durch Spritzgiessen, Mehrkomponentenspritzgiessen, Spritzgiessschweissen, Extrusion, Coextrusion, Blasformen, Tiefziehen und vergleichbare Verarbeitungsverfahren zu den entsprechenden Formteilen umgearbeitet werden, der Zusatz von Verstärkungsmitteln und Füllstoffen wie Glasfasern, Kohlefasern, Mineralien und anderen Modifizierungsmitteln, beispielsweise flammhemmende Additive, Gleit- oder Entformungsmittel, gängige Praxis. Ist die Verarbeitung der Polyamide zu Fasern oder Filamenten vorgesehen, was in erster Linie auf Polyamid-6 und -66 zutrifft, so können die üblichen Mattierungsmittel auf Titandioxid-Basis vorzugsweise vor oder während der Polymerisation oder Polykondensation zugesetzt werden.

Die nachfolgenden Beispiele erläutern die Erfindung.

Die Beispiele und Vergleichsbeispiele beinhalten ausschiesslich tief- bis mittelviskoses Polyamid-6, das sich in erster Linie für die Faserherstellung und die Herstellung von Spritzgussteilen anbietet.

Das nach dem erfindungsgmässen Verfahren stabilisierte witterungsstabile Polyamid-6 und die zum Vergleich herangezogenen Polyamid-6-Typen des Standes der Technik wurden chargenweise in einem 1301-Rührautoklaven polymerisiert. Zu diesem Zweck wurden jeweils 45 kg flüssiges Caprolactam bei 90°C zusammen mit 7 l Wasser und den in der Tabelle 1 angegebenen Mengen der übrigen Komponenten in einem rührbaren mit Stickstoff inertisierten Vorlagegefäss vermischt und die homogene Mischung anschliessend in den genannten Autoklaven überführt und dort unter inerten Bedingungen (N₂) polymerisiert. Bei der Polymerisation wurden einheitlich etwa die folgenden Bedingungen eingehalten:

| **Stufe 1** (Druckphase) | |
|---|---|
| Massetemperatur | 270°C |
| Druck | 19 bar |
| Dauer | 3 Stunden |

| **Stufe 2** (Entspannung) | |
|---|---|
| Massetemperatur | von 270 auf 260 °C |
| Druck | von 19 auf 1 bar |
| Dauer | 1,5 Stunden |

| **Stufe 3** (Entgasung) | |
|---|---|
| Massetemperatur | 260 °C |
| Druck | 1 bar |
| Dauer | ca. 5 Stunden |

Bei Erreichen der gewünschten Viskosität wurden die einzelnen Chargen als Polymerstränge abgepresst, nach Durchlaufen eines Wasserbands granuliert, mit Wasser extrahiert und getrocknet. Als Mass für die Viskosität der Polyamid-6-Schmelze wurde die Drehmomentanzeige des Rührwerks des Autoklaven zugrundegelegt.

Je 40 kg jeder Charge wurden 16 h bei 80°C mit 2400 l Frischwasser pro Stunde extrahiert. Die Trocknung erfolgte bei 110°C über 24 h im Vakuum.

Die Lösungsviskosität von extrahiertem und getrocknetem Polyamid-6 wurde in 0,5 Gew.-%iger Lösung in m-Kresol bei 20°C bestimmt.

Die Bestimmung der Endgruppen-Konzentrationen erfolgte mittels acidimetrischer Titration. Die Aminoendgruppen wurden in m-Kresol/iso-Propanol-2:1 (Gew.-Teile) als Lösungsmittel mit 0,1-normaler ethanolischer Perchlorsäure titriert. Die Titration der Carboxylendgruppen erfolgte in Benzylalkohol als Lösungsmittel mit 0,1-normalem benzylalkoholischem Kaliumhydroxid.

Zur Prüfung ihrer Witterungsstabilität wurden die einzelnen PA-6-Typen in Form von spritzgegossenen Zugstäben von 1 mm Dicke dem künstlichen Bewitterungstest nach ASTM D2565 in einem Weather-0-meter des Typs Ci35 der Firma Atlas unter folgenden Bedingungen unterworfen:
■ Bestrahlungsintensität bei 340 nm Wellenlänge : 0,35W/m²
■ Zyklus: 102/18 Minuten
■ Temperatur (Schwarztafel): 63 ± 2°C

Nach den in Tabelle 2 angegebenen Expositionszeiten wurde von jedem Produkt eine ausreichende Anzahl von Zugstäben entnommen und diese einer mechanischen Prüfung unterzogen. Als Mass für die Witterungsstabilität bzw. Resistenz der einzelnen Produkte gegen foto- und thermooxidative Schädigung wurde die Abnahme ihrer Schlagzugzähigkeit mit zunehmender Bewitterungsdauer zugrundegelegt. Die Prüfung der Schlagzugzähigkeit erfolgte nach DIN 53448 B1.2 (Jan. 1984) mittels einer Schnellzerreissmaschine des Typs REL der Firma Zwick bei 23°C und einer Geschwindigkeit von 4m/sec.. Dass einige der Produkte nach 50 Stunden Bewitterung eine höhere Schlagzugzähigkeit aufweisen als im Ausgangszustand und dieses höhere Niveau zum Teil über längere Zeiten beibehalten, ist darauf zurückzuführen, dass die Prüfkörper im Weather-0-meter periodisch bewässert werden und durch die Absorption von Wasser per se eine höhere Zähigkeit bzw. Schlagzugzähigkeit erreichen.

Die in den Beispielen verwendeten Abkürzungen haben folgende Bedeutung:

| | |
|---|---|
| LC-6 | Caprolactam |
| TPS | Terephthalsäure |
| AcOH | Essigsäure |
| NTE | Nitrilotriessigsäure |
| TAD | Triacetondiamin = 4-Amino-2.2.6.6-tetramethylpiperidin |
| DEAPA | 3-Diethylamino-1-propylamin |
| DBHPP | 3-(3,5-Di-tert-butyl-4-hydroxyphenyl)-propionsäure |
| SZZ | Schlagzugzähigkeit bei 23°C, gemessen nach DIN 53443 B1.2 |
| [C] | Carboxylendgruppenkonzentration in meq/kg |
| [A] | Aminoendgruppenkonzentration in meq/kg |
| WOM | Weather-0-meter |
| RV | Relative Lösungsviskosität in 0,5%-iger Lösung in m-Kresol bei 20°C |
| ber. | berechnet |

**Bezugsquellen von Rohstoffen**:

| | |
|---|---|
| NTE | Fluka AG; Buchs (Schweiz) |
| TAD | Hüls AG; Marl (Deutschland) |
| DEAPA | Fluka AG; Buchs (Schweiz) |
| DBHPP | Ciba Geigy AG; Basel (Schweiz) |

### Beispiele

In der Tabelle 1 sind die erfindungsgemässen und die zum Vergleich herangezogenen Polyamid-6-Typen charakterisiert. Mit Ausnahme des mit Essigsäure kettengeregelten Produkts von Vergleichsbeispiel 1 enthalten alle Polymere mehrfunktionelle Carbonsäuren als Kettenregler. Um in bezug auf die Polymerisationsgeschwindigkeit, -dauer und das mittlere Molekulargewicht am Ende der Polymerisation bei mehrfunktionellen Carbonsäuren-geregelten Produkten annähernd die gleichen Verhältnisse zu schaffen, wurde die jeweils eingesetzte Di- oder Tricarbonsäuremenge so berechnet, dass der Gleichgewichtswassergehalt bei 260°C für die unextrahierten Produkte bei einer Gesamtendgruppenkonzentration von 108,6 meq/kg 0,153 Gew.-% und für die extrahierten Produkte bei einer Gesamtendgruppenkonzentration von 120 meq/kg 0,187 Gew.-% beträgt. Die mit Wasser extrahierbaren Anteile wurden dabei mit 9,5 Gew.-% bezogen auf unextrahiertes Produkt veranschlagt. Die Gleichgewichtskonstante für das PA-6-Amidbildungsgleichgewicht bei 260°C wurde aus den von Ramesh et al. in Polymer, 1993, Vol. 34, No. 8, S. 1716 ff angegebenen Daten zu 403 berechnet.

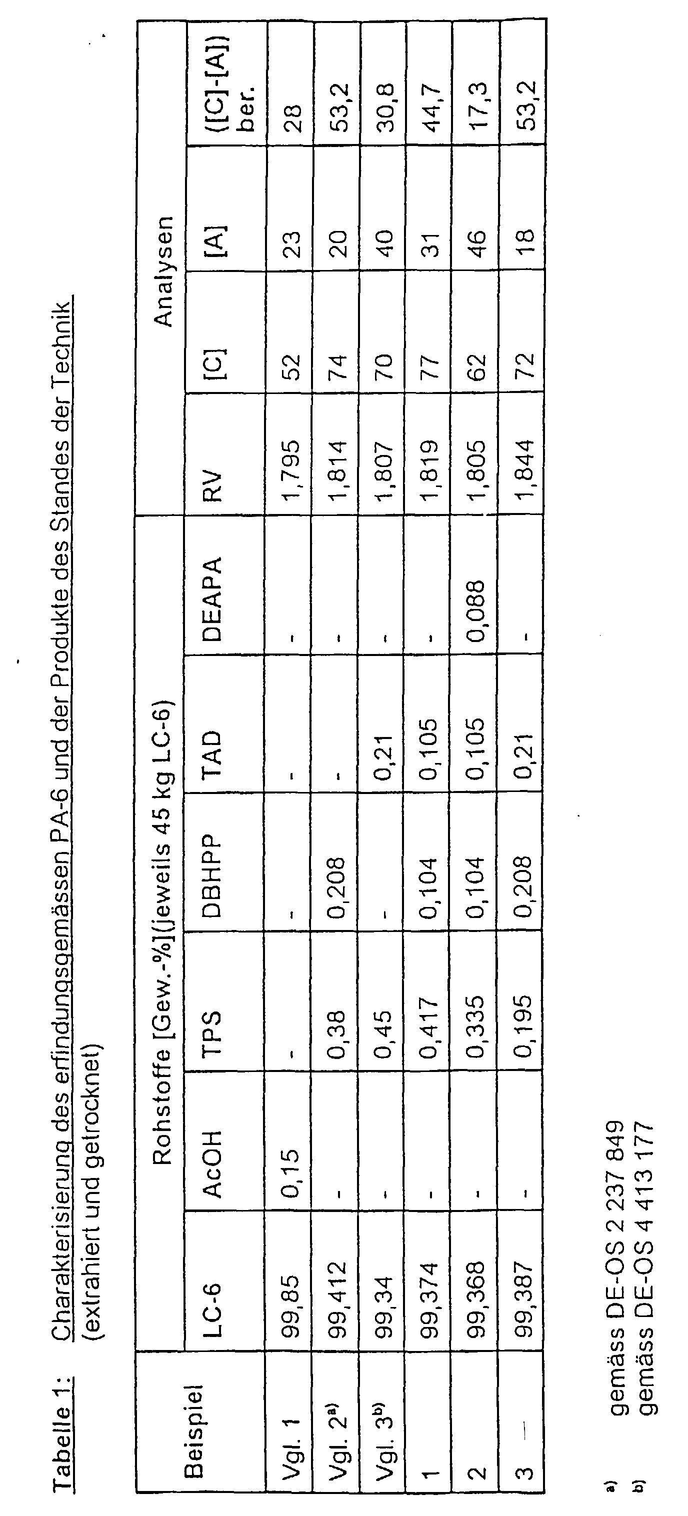

**Tabelle 2:**

| Schlagzugzähigkeit der im WOM künstlich bewitterten Produkte | | | | | | |
|---|---|---|---|---|---|---|
| **Bewitterungsdauer [h]** | **SZZ [kJ/m**^{**2**}**]** | | | | | |
| | **Vgl. 1** | **Vgl. 2** | **Vgl. 3** | **1** | **2** | **3** |
| 0 | 850 | 640 | 850 | 780 | 820 | 750 |
| 50 | 350 | 750 | 900 | 850 | 870 | 770 |
| 120 | 20 | 430 | 540 | 800 | 770 | 740 |
| 250 | 10 | 320 | 30 | 470 | 480 | 750 |
| 300 | - | 10 | 30 | 340 | 360 | 730 |

Der Vergleich von Beispiel 1 mit den Vergleichsbeispielen 2 und 3 zeigt, dass das Zusammenwirken der Komponenten II und IV über einen rein additiven Effekt hinausgeht. Das Verhalten des PA-6 von Beisiel 3, das die doppelte Menge II und IV enthält, bestätigt wenigstens bei einer Bewitterungsdauer von 250 und 300 h diesen Befund. Die Ergebnisse der Bewitterungsversuche mit den Produkten der Beispiele 1 und 2 sind praktisch identisch. Dies ist ein Beleg dafür, dass die zusätzliche Verwendung der Komponente III in Beispiel 2 keinen signifikanten Einfluss auf die Witterungsstabilität hat. Auch der TPS kann aufgrund der Daten keine stabilisierende Wirkung zugeschrieben werden.

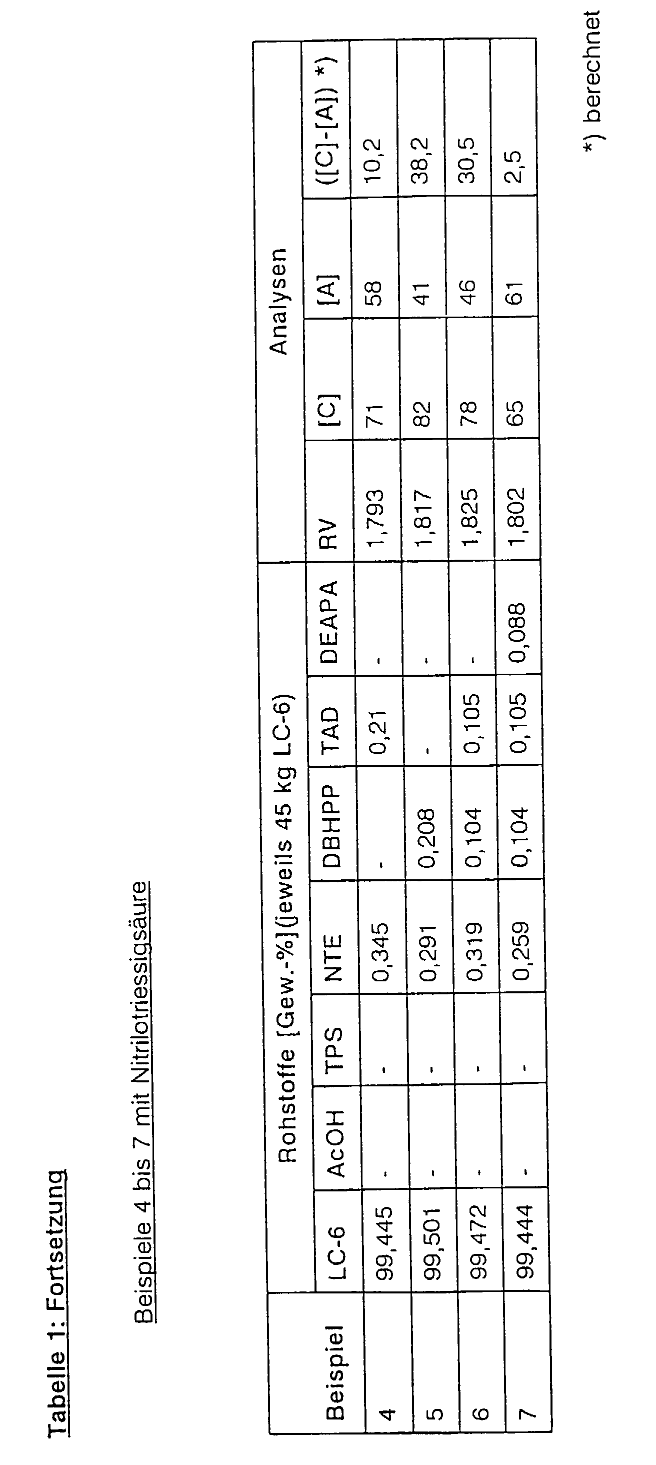

**Tabelle 2:**

| **Fortsetzung** Schlagzugzähigkeit der im WOM künstlich bewitterten Produkte | | | | |
|---|---|---|---|---|
| **Bewitterungsdauer [h]** | **SZZ [kJ/m**^{**2**}**]** | | | |
| **Beispiele** | **4** | **5** | **6** | **7** |
| 0 | 790 | 760 | 800 | 780 |
| 50 | 850 | 800 | 760 | 820 |
| 120 | 440 | 410 | 730 | 710 |
| 250 | 20 | 350 | 420 | 450 |
| 300 | 20 | 20 | 320 | 350 |

## Patentansprüche

1. Verfahren zur Herstellung von witterungsstabilen, aus Lactamen, ω-Aminocarbonsäuren, Dicarbonsäuren und Diaminen, Dicarbonsäure/Diaminsalzen zugänglichen, aliphatischen und teilkristallinen oder amorphen teilaromatischen Polyamiden, dadurch gekennzeichnet, dass die Polymerisation bzw. Polykondensation der polyamidbildenden Monomere (I) in Gegenwart von
■ 0,02 - 0,7 Gew.-% 4-Amino-2,2,6,6-tetraalkylpiperidin (II),
■ 0 - 0,5 Gew.-% eines aliphatischen oder cyloaliphatischen Diamins (III), welches eine primäre und eine tertiäre Aminogruppe trägt,
und
■ 0,02 - 0,7 Gew.-% eines in 4-Stellung zur OH-Gruppe funktionalisierten 2,6-Dialkylphenols (IV) der Formel 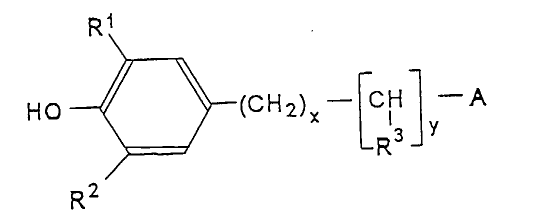 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁ - C₄-Alkoholen veresterte Carboxylgruppe oder eine primäre Aminogruppe darstellt, für x und y im Fall der Aminogruppe die Wertekombinationen (x = 2 / y = 1); (x = 2 / y =0); (x = 1 / y = 0) und (x = 0 / y = 1) möglich sind und im Fall der freien oder veresterten Carboxylgruppe x und y zusätzlich jeweils 0 sein können,
durchgeführt wird, wobei sich die Mengen der Komponenten I bis IV zu 100 Gew.-% ergänzen, die Summe der Komponenten II, III und IV 0,05 - 1,3 Gew.-% beträgt und die Komponenten II, III und IV über Amidbindungen an die Polymerketten gebunden sind.

2. Verfahren zur Herstellung von witterungsstabilen aus Lactam, ω-Aminocarbonsäuren zugänglichen Polyamiden, dadurch gekennzeichnet, daß die Polykondensation der polyamidbildenden Monomere (I) in Gegenwart von
- 0,02 is 0,7 Gew.-% 4-Amino-2,2,6,6-tetraalkylpiperidin(ll),
- 0 bis 0,5 Gew.-% eines aliphatischen oder cycloaliphatischen Diamins (III), welches eine primäre und eine tertiäre Aminogruppe trägt,
und gegebenenfalls
- 0,02 bis 0,7 Gew.-% eines in 4-Stellung zur OH-Gruppe funktionalisierten 2,6-Dialkylphenols (IV) der Formel: 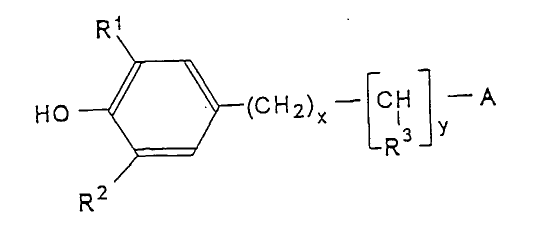 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁ - C₄-Alkoholen veresterte Carboxylgruppe oder eine primäre Aminogruppe darstellt, für x und y im Fall der Aminogruppe die Wertekombinationen (x = 2 / y = 1); (x=2 / y = 0); (x = 1 / y = 0) und (x = 0 / y = 1) möglich sind und im Fall der freien oder veresterten Carboxylgruppe x und y zusätzlich jeweils 0 sein können,
und
- 0,1 bis 1,2 Gew.-% ener Tri-, Tetra- oder Polycarbonsäure (V)
durchgeführt wird, wobei sich die Mengen der Komponenten I bis V zu 100 Gew.-% ergänzen, die Summe der Komponenten II, III, IV und V 0,2 - 2,5 Gew.-% beträgt und die Komponenten II, III, IV und V über Amidbindungen an die Polymerketten gebunden sind.

3. Verfahren nach Anspruch 2, dadurch gekennzeichnet, daß als Komponente V mindestens eine Tricarbonsäure der folgenden Formel: 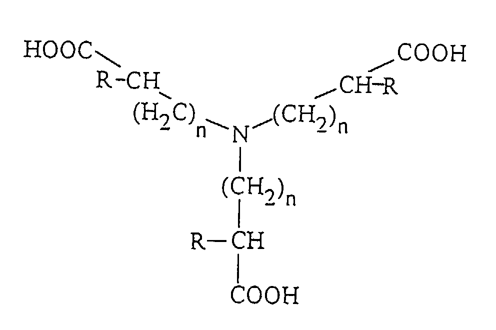 worin R = H oder CH₃ und n 0 oder 1 bedeuten, wobei im Falle von R = CH₃ n gleich 1 ist,
eingesetzt wird.

4. Verfahren gemäss Anspruch 1 oder 2, dadurch gekennzeichnet, dass die Menge der Komponente II 0,03 - 0,6 Gew.-% beträgt.

5. Verfahren gemäss Ansprüchen 1 oder 2, dadurch gekennzeichnet, dass die Menge der Komponente III 0 - 0,4 Gew.-% beträgt.

6. Verfahren gemäss einem oder mehreren der Ansprüche 1 bis 5, dadurch gekennzeichnet, dass die Menge der Komponente IV 0,03-0,6 Gew.-% beträgt.

7. Verfahren gemäss einem oder mehreren der Ansprüche 1 bis 6, dadurch gekennzeichnet, dass die Gesamtmenge der Komponenten II, III und IV 0,06 - 1,0 Gew.-% beträgt.

8. Verfahren gemäss einem oder mehreren der Ansprüche 1, 2, 6 und 7, dadurch gekennzeichnet, dass R¹ = R² = -C(CH₃)₃(t-Butyl) oder R¹ = t-Butyl und R² = Methyl ist.

9. Verfahren gemäss einem oder mehreren der Ansprüche 1, 2, 4 und 7, dadurch gekennzeichnet, dass als Komponente II 4-Amino-2,2,6,6-tetramethylpiperidin verwendet wird.

10. Verfahren gemäss einem oder mehreren der Ansprüche 1, 2, 6 und 8, dadurch gekennzeichnet, dass als Komponente IV eine Verbindung,
ausgewählt aus der Gruppe der Verbindungen mit A=-COOH oder A = -COOCH₃ oder A = -NH₂, R³ = H sowie x = 2 und y = 1, verwendet wird.

11. Verfahren gemäß einem oder mehreren der Ansprüche 1 bis 10, dadurch gekennzeichnet, daß die Polykondensation zu Polyamid 6,
-11, -12, -66, -69, -610, -6.12, 61, MXDA6 bzw. zu Copolyamid-6/12, -6/66, -66/12, -6/66/12, -6/69, -6/610, -66/610, 6T/6l durchgeführt wird.

12. Witterungsstabile, aus Lactamen, ω-Aminocarbonsäuren, Dicarbonsäuren und Diaminen, Dicarbonsäure/Diaminsalzen zugängliche aliphatische und teilkristalline oder teilaromatische amorphe Polyamide, dadurch gekennzeichnet, dass sie im wesentlichen aus polyamidbildenden Monomeren (I),
■ 0,02-0,7 Gew.-% 4-Amino-2,2,6,6-tetraalkylpiperidin (II),
■ 0-0,5 Gew.-% eines aliphatischen oder cyloaliphatischen Diamins (III), welches eine primäre und eine tertiäre Aminogruppe trägt
und
■ 0,02-0,7 Gew.-% eines in 4-Stellung zur OH-Gruppe funktionalisierten 2,6-Dialkylphenols (IV) der Formel 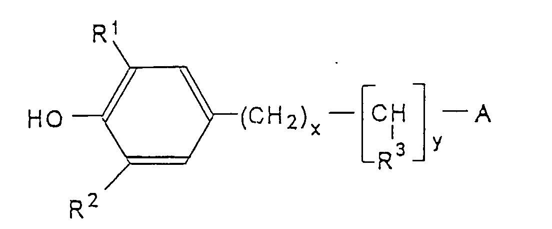 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2 / y = 1); (x = 2 / y = 0); (x = 1 / y = 0) und (x = 0 / y = 1) möglich sind und im Fall der freien oder veresterten Carboxylgruppe x und y zusätzlich jeweils 0 sein können,
aufgebaut sind, wobei sich die Mengen der Komponenten I bis IV zu 100 Gew.-% ergänzen, die Summe der Komponenten II, III und IV 0,05 - 1,3 Gew.-% beträgt und die Komponenten II, III und IV über Amidbindungen an die Polymerketten gebunden sind.

13. Witterungsstabile, aus Lactamen, ω-Aminocarbonsäuren zugängliche Polyamide, dadurch gekennzeichnet, daß sie im wesentlichen aus Polyamid bildenden Monomeren (I),
■ 0,02-0,7 Gew.-% 4-Amino-2,2,6,6-tetraalkylpiperidin (II),
■ 0-0,5 Gew.-% eines aliphatischen oder cyloaliphatischen Diamins (III), welches eine primäre und eine tertiäre Aminogruppe trägt, gegebenenfalls
■ 0,02-0,7 Gew.-% eines in 4-Stellung zur OH-Gruppe funktionalisierten 2,6-Dialkylphenols (IV) der Formel 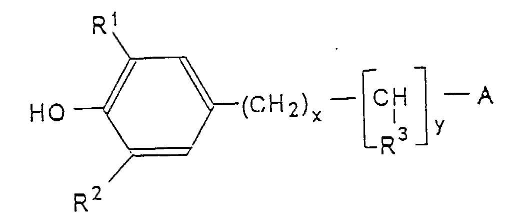 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2 / y = 1); (x=2 / y = 0); (x=1 / y = 0) und (x = 0 / y=1) möglich sind und im Fall der freien oder veresterten Carboxylgruppe x und y zusätzlich jeweils 0 sein können,
und
0,1 bis 1,2 Gew.-% einer Tri-, Tetra- oder Polycarbonsäure (V) aufgebaut sind,
wobei sich die Mengen der Komponenten I bis V zu 100 Gew.-% ergänzen, die Summe der Komponenten II, III, IV und V 0,2 bis 2,5 Gew.-% beträgt und die Komponenten II, III, IV und V über Amidbindungen an die Polymerketten gebunden sind.

14. Polyamide nach Anspruch 13, dadurch gekennzeichnet, daß als Komponente V mindestens eine Tricarbonsäure der folgenden Formel 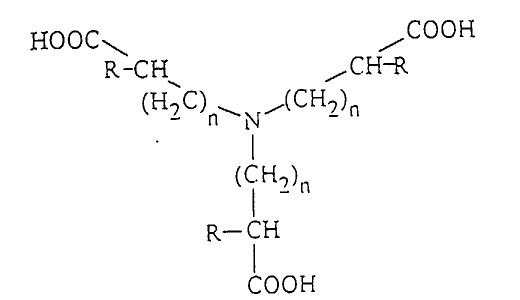 worin R = H oder CH₃ und n 0 oder 1 bedeuten, wobei im Falle von R = CH₃ n gleich 1 ist,
eingesetzt wird.

15. Verwendung der Polyamide nach einem der Ansprüche 12, 13 oder 14 zur Herstellung von spritzgegossenen oder extrudierten Teilen, zur Herstellung von Fäden, Fasern oder Folien, beziehungsweise zur Herstellung von
Schmelzklebepulvern oder -fasern.

## Claims

1. Method of producing weather-resistant, aliphatic and partially crystalline or amorphous partially aromatic polyamides obtainable from lactams, ω-aminocarboxylic acids, dicarboxylic acids and diamines, dicarboxylic acid/diamine salts, characterised in that the polymerisation, or respectively the polycondensation, of the polyamide-forming monomers (I) is carried out in the presence of
■ 0.02 - 0.7 % by wt. 4-amino-2,2,6,6-tetraalkylpiperidine (II),
■ 0 - 0.5 % by wt. of an aliphatic or cycloaliphatic diamine (III), which carries a primary and a tertiary amino group,
and
■ 0.02 - 0.7 % by wt. of a 2,6-dialkylphenol (IV), functionalised in 4-position relative to the OH group, of the formula: 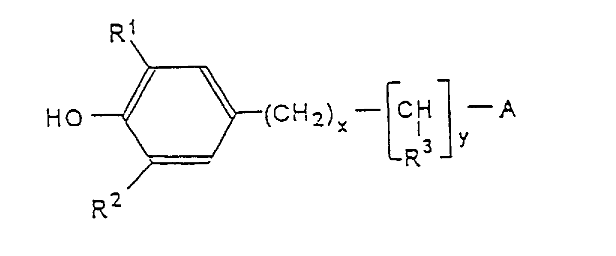 in which R¹ and R² are identical or different alkyl residues having 1 to 6 C atoms, R³ is either a hydrogen atom or a methyl group, the functional group A represents either a free carboxyl group or a carboxyl group esterified with C₁ - C₄ alcohols, or a primary amino group; in the case of the amino group, the value combinations (x=2 / y=1); (x=2 / y=0); (x=1 / y=0) and (x=0 / y=1) are possible for x and y and, in the case of the free or esterified carboxyl group, x and y can additionally each be 0,
the quantities of the components I to IV making up 100 % by wt., the sum of the components II, III and IV amounting to 0.05 - 1.3 % by wt., and the components II, III and IV being joined to the polymer chains by amide bonds.

2. Method of producing weather-resistant polyamides obtainable from lactam, ω-aminocarboxylic acids, characterised in that the polycondensation of the polyamide-forming monomers (I) is carried out in the presence of
- 0.02 to 0.7 % by wt. 4-amino-2,2,6,6-tetraalkylpiperidine (II),
- 0 to 0.5 % by wt. of an aliphatic or cycloaliphatic diamine (III), which carries a primary and a tertiary amino group,
and possibly
- 0.02 to 0.7 % by wt. of a 2,6-dialkylphenol (IV), functionalised in 4-position relative to the OH group, of the formula: 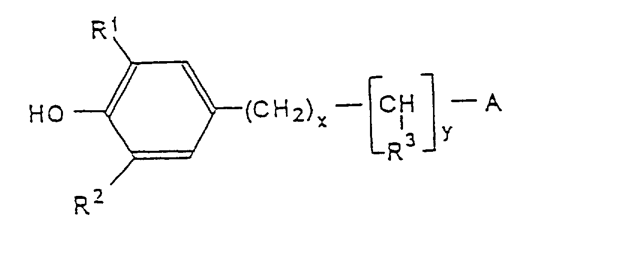 in which R¹ and R² are identical or different alkyl residues having 1 to 6 C atoms, R³ is either a hydrogen atom or a methyl group, the functional group A represents either a free carboxyl group or a carboxyl group esterified with C₁ - C₄ alcohols, or a primary amino group; in the case of the amino group, the value combinations (x=2 / y=1); (x=2 / y=0); (x=1 / y=0) and (x=0 / y=1) are possible for x and y and, in the case of the free or esterified carboxyl group, x and y can additionally each be 0,
and
- 0.1 to 1.2 % by wt. of a tri-, tetra- or polycarboxylic acid (V),
the quantities of the components I to V making up 100 % by wt., the sum of the components II, III, IV and V amounting to 0.2 - 2.5 % by wt., and the components II, III, IV and V being joined to the polymer chains by amide bonds.

3. Method according to claim 2, characterised in that at least one tricarboxylic acid of the following formula: 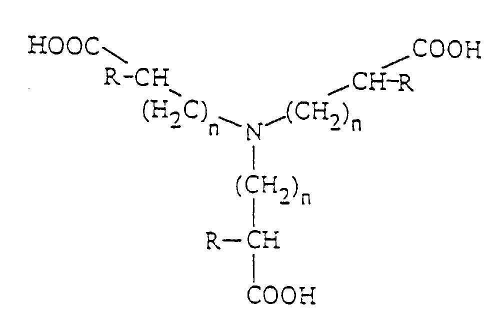 is used as component V, in which formula R = H or CH₃, and n signifies 0 or 1, n being equal to 1 in the case of R = CH₃.

4. Method according to claim 1 or 2, characterised in that the quantity of component II amounts to 0.03 - 0.6 % by wt.

5. Method according to claims 1 or 2, characterised in that the quantity of component III amounts to 0 - 0.4 % by wt.

6. Method according to one or more of claims 1 to 5, characterised in that the quantity of component IV amounts to 0.03 - 0.6 % by wt.

7. Method according to one or more of claims 1 to 6, characterised in that the total quantity of components II, III and IV amounts to 0.06 - 1.0 % by wt.

8. Method according to one or more of claims 1, 2, 6 and 7, characterised in that R¹ = R² = -C(CH₃)₃(t-butyl), or R¹ = t-butyl and R² = methyl.

9. Method according to one or more of claims 1, 2, 4 and 7, characterised in that 4-amino-2,2,6,6-tetramethylpiperidine is used as component II.

10. Method according to one or more of claims 1, 2, 6 and 8, characterised in that a compound, selected from the group of compounds having A = -COOH or A = -COOCH₃ or A = -NH₂, R³ = H and x = 2 and y = 1, is used as component IV.

11. Method according to one or more of claims 1 to 10, characterised in that the polycondensation is carried out to form polyamide 6, -11, -12, -66, -69, -610, -6.12, 61, MXDA6, or respectively to form copolyamide -6/12, -6/66, -66/12, -6/66/12, -6/69, -6/610, -66/610, 6T/61.

12. Weather-resistant, aliphatic and partially crystalline or partially aromatic amorphous polyamides, obtainable from lactams, ω-aminocarboxylic acids, dicarboxylic acids and diamines, dicarboxylic acid/diamine salts, characterised in that they are substantially formed from polyamide-forming monomers (I),
■ 0.02 - 0.7 % by wt. 4-amino-2,2,6,6-tetraalkylpiperidine (II),
■ 0 - 0.5 % by wt. of an aliphatic or cycloaliphatic diamine (III), which carries a primary and a tertiary amino group,
and
■ 0.02 - 0.7 % by wt. of a 2,6-dialkylphenol (IV), functionalised in 4-position relative to the OH group, of the formula: 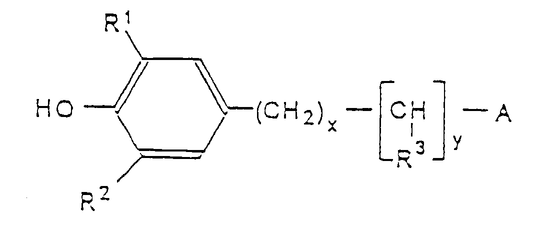 in which R¹ and R² are identical or different alkyl residues having 1 to 6 C atoms, R³ is either a hydrogen atom or a methyl group, the functional group A represents either a free carboxyl group or a carboxyl group esterified with C₁ - C₄ alcohols, or a primary amino group; in the case of the amino group, the value combinations (x=2 / y=1); (x=2 / y=0); (x=1 / y=0) and (x=0 / y=1) are possible for x and y and, in the case of the free or esterified carboxyl group, x and y can additionally each be 0,
the quantities of the components I to IV making up 100 % by wt., the sum of the components II, III and IV amounting to 0.05 - 1.3 % by wt., and the components II, III and IV being joined to the polymer chains by amide bonds.

13. Weather-resistant polyamides obtainable from lactams, ω-aminocarboxylic acids, characterised in that they are substantially formed from polyamide-forming monomers (I),
■ 0.02 - 0.7 % by wt. 4-amino-2,2,6,6-tetraalkylpiperidine (II),
■ 0 - 0.5 % by wt. of an aliphatic or cycloaliphatic diamine (III), which carries a primary and a tertiary amino group,
possibly
■ 0.02 - 0.7 % by wt. of a 2,6-dialkylphenol (IV), functionalised in 4-position relative to the OH group, of the formula: 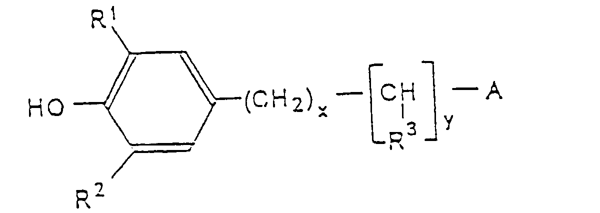 in which R' and R² are identical or different alkyl residues having 1 to 6 C atoms, R³ is either a hydrogen atom or a methyl group, the functional group A represents either a free carboxyl group or a carboxyl group esterified with C₁ - C₄ alcohols, or a primary amino group; in the case of the amino group, the value combinations (x=2 / y=1); (x=2 / y=0); (x=1 / y=0) and (x=0 / y=1) are possible for x and y and, in the case of the free or esterified carboxyl group, x and y can additionally each be 0,
and
0.1 to 1.2 % by wt. of a tri-, tetra- or polycarboxylic acid (V),
the quantities of the components I to V making up 100 % by wt., the sum of the components II, III, IV and V amounting to 0.2 to 2.5 % by wt., and the components II, III, IV and V being joined to the polymer chains by amide bonds.

14. Polyamides according to claim 13, characterised in that at least one tricarboxylic acid of the following formula: 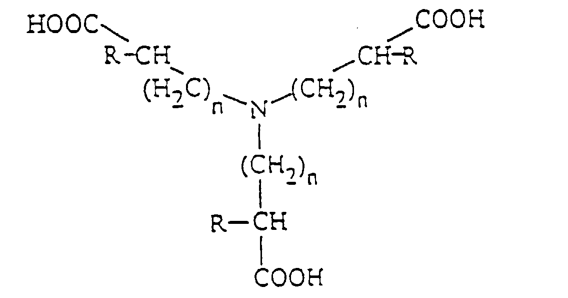 is used as component V, in which formula R = H or CH₃, and n signifies 0 or 1, n being equal to 1 in the case of R = CH₃.

15. Use of the polyamides according to one of claims 12, 13 or 14 for the production of injection-moulded or extruded parts, for the production of filaments, fibres or films, or respectively for the production of hot-melt-type adhesive powders or fibres.

## Revendications

1. Procédé pour la préparation de polyamides aliphatiques et semicristallins ou de polyamides semiaromatiques amorphes, résistant aux intempéries, pouvant être obtenus à partir des lactames, des acides ω-aminocarboxyliques, des acides dicarboxyliques et des diamines, des sels d'acides dicarboxyliques/ diamines, caractérisé en ce que l'on effectue la polymérisation ou la polycondensation des monomères (I) formant des polyamides en présence de :
■ 0,02 à 0,7 % en poids de 4-amino-2,2,6,6-tétraalkylpipéridine (II),
■ 0 à 0,5 % en poids d'une diamine aliphatique ou cycloaliphatique (III), portant un groupe amino primaire et un groupe amino tertiaire, et
■ 0,02 à 0,7 % en poids d'un 2,6-dialkylphénol (IV) fonctionnalisé en position 4 par rapport au groupe OH de formule : 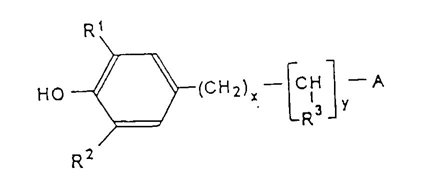 dans laquelle R¹ et R² sont des restes alkyles comportant 1 à 6 atomes de C, identiques ou différents, R³ est, soit un atome d'hydrogène, soit un groupe méthyle, le groupe fonctionnel A représente, soit un groupe carboxylique libre ou estérifié par des alcools en C₁-C₄, soit un groupe amino primaire, pour x et y dans le cas d'un groupe amino sont possibles les combinaisons de valeurs (x=2/ y=1), (x=2/y=0), (x=1/y=0) et (x=0/y=1) et, dans le cas d'un groupe carboxylique libre ou estérifié, x et y peuvent être en plus égaux à 0, les quantités des composants I à IV se complétant pour former 100 % en poids, la somme des composants II, III et IV étant comprise entre 0,05 et 1,3 % en poids et les composants II, III et IV étant liés aux chaînes du polymère par des liaisons amides.

2. Procédé pour la préparation de polyamides résistant aux intempéries, pouvant être obtenus à partir du lactame et des acides ω-aminocarboxyliques, caractérisé en ce que l'on effectue la polycondensation des monomères (I) formant des polyamides en présence de :
■ 0,02 à 0,7 % en poids de 4-amino-2,2,6,6-tétraalkylpipéridine (II),
■ 0 à 0,5 % en poids d'une diamine aliphatique ou cycloaliphatique (III), portant un groupe amino primaire et un groupe amino tertiaire, et éventuellement
■ 0,02 à 0,7 % en poids d'un 2,6-dialkylphénol (IV) fonctionnalisé en position 4 par rapport au groupe OH de formule : 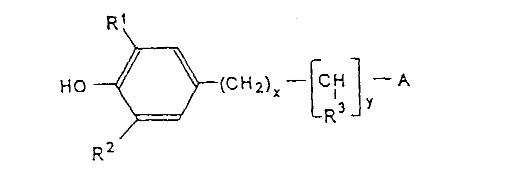 dans laquelle R¹ et R² sont des restes alkyles comportant 1 à 6 atomes de C, identiques ou différents, R³ est, soit un atome d'hydrogène, soit un groupe méthyle, le groupe fonctionnel A représente, soit un groupe carboxylique libre ou estérifié par des alcools en C₁-C₄, soit un groupe amino primaire, pour x et y dans le cas d'un groupe amino sont possibles les combinaisons de valeurs (x=2/y=1), (x=2/y=0), (x=1/y=0) et (x=0/y=1) et, dans le cas d'un groupe carboxylique libre ou estérifiés, x et y peuvent être en plus égaux à 0, et
■ 0,1 à 1,2 % en poids d'un acide tri-, tétra- ou polycarboxylique (V),
les quantités des composants I à V se complétant pour former 100 % en poids, la somme des composants II, III, IV et V étant comprise entre 0,2 et 2,5 % en poids et les composants II, III, IV et V étant liés aux chaînes du polymère par des liaisons amides.

3. Procédé selon la revendication 2, caractérisé en ce que l'on utilise comme composant V au moins un acide tricarboxylique ayant la formule suivante : 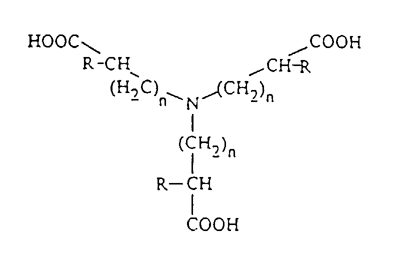 dans laquelle R = H ou CH₃ et n est égal à 0 ou 1, dans le cas où R = CH₃ n est égal à 1.

4. Procédé selon la revendication 1 ou 2, caractérisé en ce que la quantité du composant II est comprise entre 0,03 et 0,6 % en poids.

5. Procédé selon la revendication 1 ou 2, caractérisé en ce que la quantité du composant III est comprise entre 0 et 0,4 % en poids.

6. Procédé selon l'une ou plusieurs des revendications 1 à 5, caractérisé en ce que la quantité du composant IV est comprise entre 0,03 et 0,6% en poids.

7. Procédé selon l'une ou plusieurs des revendications 1 à 6, caractérisé en ce que la quantité totale des composants II, III et IV est comprise entre 0,06 et 1,0 % en poids.

8. Procédé selon l'une ou plusieurs des revendications 1, 2, 6 et 7, caractérisé en ce que R¹ = R² = -C(CH₃)₃(t-butyle) ou R¹= t-butyl et R² = méthyle.

9. Procédé selon l'une ou plusieurs des revendications 1, 2, 4 et 7, caractérisé en ce que l'on utilise comme composant II la 4-amino-2,2,6,6-tétraméthylpipéridine.

10. Procédé selon l'une ou plusieurs des revendications 1, 2, 6 et 8, caractérisé en ce que l'on utilise, comme composant IV, un composé choisi dans le groupe des composés dans lesquels A = -COOH ou A = -COOCH₃ ou A = -NH₂, R³ = H, ainsi que x = 2 et y = 1.

11. Procédé selon l'une ou plusieurs des revendications 1 à 10, caractérisé en ce que l'on effectue la polycondensation pour former les polyamides 6, 11, 12, 66, 69, 610, 6.12, 61, MXDA6 ou les copolyamides 6/12, 6/66, 66/12, 6/66/12, 6/69, 6/610, 66/610, 6T/61.

12. Polyamides aliphatiques et semicristallins ou polyamides semiaromatiques amorphes, résistant aux intempéries, pouvant être obtenus à partir des lactames, des acides ω-aminocarboxyliques, des acides dicarboxyliques et des diamines, des sels d'acides dicarboxyliques/diamines, caractérisés en ce qu'ils sont essentiellement formés de monomères (I) formant des polyamides,
■ de 0,02 à 0,7 % en poids de 4-amino-2,2,6,6-tétraalkylpipéridine (II),
■ de 0 à 0,5 % en poids d'une diamine aliphatique ou cycloaliphatique (III), portant un groupe amino primaire et un groupe amino tertiaire, et
■ de 0,02 à 0,7 % en poids d'un 2,6-dialkylphénol (IV) fonctionnalisé en position 4 par rapport au groupe OH de formule : 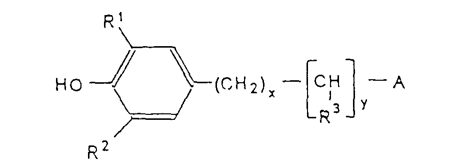 dans laquelle R¹ et R² sont des restes alkyles comportant 1 à 6 atomes de C, identiques ou différents, R³ est, soit un atome d'hydrogène, soit un groupe méthyle, le groupe fonctionnel A représente, soit un groupe carboxylique libre ou estérifié par des alcools en C₁-C₄, soit un groupe amino primaire, pour x et y dans le cas d'un groupe amino sont possibles les combinaisons de valeurs (x=2/ y=1), (x=2/y=0), (x=1/y=0) et (x=0/y=1) et, dans le cas d'un groupe carboxylique libre ou estérifié, x et y peuvent être en plus égaux à 0,
les quantités des composants I à IV se complétant pour former 100 % en poids, la somme des composants II, III et IV étant comprise entre 0,05 et 1,3 % en poids et les composants II, III et IV étant liés aux chaînes du polymère par des liaisons amides.

13. Polyamides résistant aux intempéries pouvant être obtenus à partir des lactames et des acides ω-aminocarboxyliques, caractérisés en ce qu'ils sont essentiellement formés de monomères (I) formant des polyamides,
■ de 0,02 à 0,7 % en poids de 4-amino-2,2,6,6-tétraalkylpipéridine (II),
■ de 0 à 0,5 % en poids d'une diamine aliphatique ou cycloaliphatique (III), portant un groupe amino primaire et un groupe amino tertiaire, éventuellement
■ de 0,02 à 0,7 % en poids d'un 2,6-dialkylphénol (IV) fonctionnalisé en position 4 par rapport au groupe OH de formule : 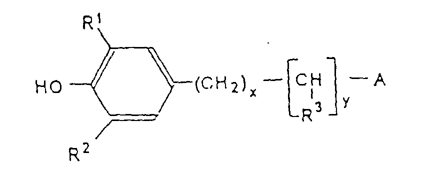 dans laquelle R¹ et R² sont des restes alkyles comportant 1 à 6 atomes de C, identiques ou différents, R³ est, soit un atome d'hydrogène, soit un groupe méthyle, le groupe fonctionnel A représente, soit un groupe carboxylique libre ou esté-rifié par des alcools en C₁-C₄, soit un groupe amino primaire, pour x et y dans le cas d'un groupe amino sont possibles les combinaisons de valeurs (x=2/y=1), (x=2/y=0), (x=1/y=0) et (x=0/y=1) et, dans le cas d'un groupe carboxylique libre ou estérifié, x et y peuvent être en plus égaux à 0, et
■ de 0,1 à 1,2 % en poids d'un acide tri-, tétra- ou polycarboxylique (V),
les quantités des composants I à V se complétant pour former 100 % en poids, la somme des composants II, III, IV et V étant comprise entre 0,2 et 2,5 % en poids et les composants II, III, IV et V étant liés aux chaînes du polymère par des liaisons amides.

14. Polyamides selon la revendication 13, caractérisés en ce que l'on utilise, comme composant V, au moins un acide tricarboxylique ayant la formule suivante : 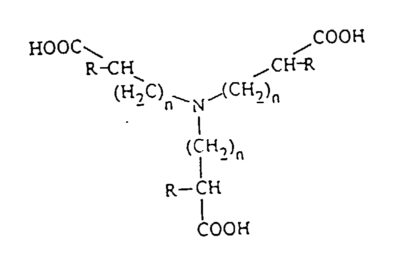 dans laquelle R = H ou CH₃ et n est égal à 0 ou 1, dans le cas où R = CH₃ n est égal à 1.

15. Utilisation des polyamides selon l'une des revendications 12, 13 ou 14 pour la fabrication de pièces moulées par injection ou extrudées, de fils, de fibres ou de feuilles ou pour la fabrication de poudres ou de fibres adhésives thermofusibles.
